# EUROPÄISCHE PATENTSCHRIFT

(11) **EP 2 087 932 B1**
(45) Veröffentlichungstag und Bekanntmachung des Hinweises auf die Patenterteilung: **01.03.2017**
(21) Anmeldenummer: 08172596.2
(22) Anmeldetag: 22.12.2008
(51) Int. Cl.: B01D 45/08, B01D 46/10, B01D 47/06, B01D 50/00

(54) **VORRICHTUNG ZUR ABSCHEIDUNG VON FESTEN ODER FLÜSSIGEN SUBSTANZEN AUS EINEM GASSTROM**
DEVICE FOR SEPARATING SOLID OR FLUID SUBSTANCES FROM A GAS FLOW
DISPOSITIF DE SÉPARATION DE SUBSTANCES SOLIDES OU LIQUIDES D'UN FLUX DE GAZ

(30) Priorität: 09.02.2008 DE 102008008401
(43) Veröffentlichungstag der Anmeldung: 12.08.2009
(73) Patentinhaber: Rentschler Reven GmbH, 74372 Sersheim (DE)
(72) Erfinder: Rentschler, Sven, 74372 Sersheim (DE)
(74) Vertreter: Hoeger, Stellrecht & Partner Patentanwälte mbB

(56) Entgegenhaltungen:
- DE-A1- 3 031 951
- US-A- 5 756 047
- US-A1- 2003 000 390
- US-B1- 6 451 096

## Beschreibung

Die Erfindung betrifft eine Vorrichtung zur Abscheidung von festen oder flüssigen Substanzen aus einem Gasstrom mit einem Strömungskanal für das zu reinigende Gas, mit einem quer zur Strömungsrichtung des Gasstromes in dem Strömungskanal angeordneten flächigen Abscheideelement und mit mindestens einem Flüssigkeitsauslass, der stromaufwärts des Abscheideelementes angeordnet ist und im stromaufwärts des Abscheideelementes gelegenen Abschnitt des Strömungskanals einen Flüssigkeitsnebel erzeugt, wobei der mindestens eine Flüssigkeitsauslass stromaufwärts vor einem Randbereich des Abscheideelementes angeordnet und so orientiert ist, dass aus ihm zur Erzeugung des Flüssigkeitsnebels von dem Randbereich ausgehend in Richtung auf den gegenüberliegenden Randbereich und im Wesentlichen parallel zu dem Abscheideelement Flüssigkeit austritt, und wobei in dem Strömungskanal stromaufwärts des mindestens einen Flüssigkeitsauslasses eine Blende angeordnet ist, die den mindestens einen Flüssigkeitsauslass gegenüber dem Gasstrom abschirmt, und die im Wesentlichen quer zur Strömungsrichtung des Gasstromes und damit im Wesentlichen parallel zu dem Abscheideelement angeordnet ist, wobei der Gasstrom in dem nicht abgeschirmten Querschnitt des Strömungskanals weiter in Richtung auf das Abscheideelement strömen kann.

Bei derartigen Vorrichtungen können die Abscheideelemente als Agglomeratoren, Filter oder Umlenkelemente ausgebildet sein. Die Abscheidewirkung lässt sich durch Besprühen mit einer Flüssigkeit erhöhen. Diese Besprühung führt zu einer besseren Reinigungswirkung durch Abspülen von Partikeln von den Abscheideelementen, durch eine bessere Agglomerationswirkung, durch eine höhere Filtersättigung und auch zu einem Auswaschen von Gaspartikeln im Gasstrom durch den Sprühnebel. Es ist bekannt, Sprühdüsen mit Sprühwirkung in Richtung des Gasstromes innerhalb des Strömungskanals anzuordnen, um auf diese Weise einen wirksamen Sprühnebel zu erzeugen. Dabei benötigt man aber sehr häufig eine sehr dichte Belegung des Querschnittes mit Sprühdüsen, um über den gesamten Querschnitt des Strömungskanals einen Sprühnebel zu erzeugen. Wenn man die Anzahl der Sprühdüsen erniedrigt, werden sehr hohe Drücke benötigt, und dies führt in jedem Fall zu einem unerwünscht hohen Flüssigkeitsverbrauch (DE 27 36 239 C3; EP 1 381 469 B1).

In der Offenlegungsschrift DE 30 31 951 A1 wird eine Anlage zur Entfernung gasförmiger und fester Schadstoffe sowie Nebel derselben aus einem Abgas beschrieben. Die Anlage umfasst eine Quentsche als erste Waschstufe und eine in Gasströmungsrichtung dieser nachgestaltete zweite Waschstufe, wobei zwischen der ersten und zweiten Waschstufe ein im Wesentlichen senkrecht angeordneter Tropfenabscheider zwischengeschaltet ist.

Es ist Aufgabe der Erfindung, eine gattungsgemäße Vorrichtung so auszubilden, dass eine wirksame Ausbildung eines Sprühnebels stromaufwärts des Abscheideelementes möglich wird mit einer möglichst geringen Anzahl von Flüssigkeitsauslässen und mit Flüssigkeitsdrücken, die relativ niedrig sind.

Diese Aufgabe wird bei einer Vorrichtung der eingangs beschriebenen Art erfindungsgemäß dadurch gelöst, dass die Blende an ihrem dem nicht abgeschirmten Teil des Abscheideelements zugewandten freien Rand eine entgegen der Strömungsrichtung des Gasstroms umgebogene Umlenkfläche trägt.

Auf diese Weise tritt die Flüssigkeit aus dem mindestens einen Flüssigkeitsauslass im Wesentlichen parallel zu dessen Oberfläche aus und überstreicht dabei das Abscheideelement von einem Rand zum gegenüberliegenden Rand, der Flüssigkeitsauslass selbst wird durch die Blende wirksam gegenüber dem Gasstrom abgeschirmt, so dass sich im Bereich des Flüssigkeitsauslasses zunächst im Wesentlichen ungestört der Sprühnebel ausbilden kann, der dann in den nicht abgeschirmten Teil des Strömungskanals eintritt und dort großflächig den Querschnitt des Strömungskanals ausfüllt, so dass in diesem Bereich durchströmendes Gas diesen Sprühnebel bei seinem Strömungsweg zu dem Abscheideelement durchströmt.

Da sich der Sprühnebel im Schutze der Blende ausbilden kann, kann mit einem einzigen Flüssigkeitsauslass eine relativ großflächige Ausbildung des Sprühnebels erzeugt werden, dabei genügen relativ niedrige Auslassdrücke, um eine gute Auffächerung der Flüssigkeit nach dem Austritt aus dem Flüssigkeitsauslass zu erzielen.

Die Blende ist im Wesentlichen quer zur Strömungsrichtung des Gasstromes und damit im Wesentlichen parallel zu dem Abscheid-Element angeordnet. Der gegen die Blende gerichtete Teil des Gasstromes wird an der Blende abgelenkt und teilweise zur Umkehr gezwungen, teilweise kann dieser Gasstrom in dem nicht abgeschirmten Querschnitt des Strömungskanals weiter in Richtung auf das Abscheideelement strömen und dabei den dort ausgebildeten Sprühnebel der Flüssigkeit durchdringen.

Bei einer bevorzugten Ausführungsform ist vorgesehen, dass eine den Zwischenraum zwischen der Blende und dem Abscheideelement zumindest teilweise überdeckende Abdeckung vorgesehen ist, die der Auslassöffnung des mindestens einen Flüssigkeitsauslasses gegenüberliegt. Damit wird der Zwischenraum zwischen der Blende und dem Abscheideelement an der Randseite zumindest teilweise abgeschlossen, die dem sich ausbildenden Flüssigkeitsnebel abgewandt ist, und dies trägt zu einer weiteren Beruhigung der Strömungsverhältnisse in diesem Bereich des Zwischenraumes bei, so dass sich dort im Wesentlichen ungestört ein in den nicht abgeschirmten Teil des Strömungskanals sich ausbreitender Flüssigkeitsnebel entstehen kann.

Günstig ist es, wenn die Abdeckung im Wesentlichen quer zur Fläche der Blende und des Abscheideelementes verläuft.

Insbesondere kann die Abdeckung mit der Blende verbunden sein, gegebenenfalls auch einteilig verbunden.

Die Größe der Blende wird vorzugsweise so gewählt, dass die Blende ausgehend vom Rand des Abscheideelementes zwischen 20% und 40% der Fläche des Abscheideelementes überdeckt, insbesondere etwa 1/3 der Fläche des Abscheideelementes.

Während es grundsätzlich möglich ist, den Sprühnebel mit nur einem einzigen Flüssigkeitsauslass zu erzeugen, ist es insbesondere bei breiteren Strömungskanälen vorteilhaft, wenn über die Breite des Strömungskanals mehrere Flüssigkeitsauslässe nebeneinander angeordnet sind.

Erfindungsgemäß ist vorgesehen, dass die Blende an ihrem dem nicht abgeschirmten Teil des Abscheideelementes zugewandten freien Rand eine entgegen der Strömungsrichtung des Gasstromes umgebogene Umlenkfläche trägt. Diese kann einstückig mit der Blende ausgebildet sein. Diese Umlenkfläche unterstützt die Umkehr des auf die Blende auftreffenden Gasstromes und führt außerdem dazu, dass dieser in seiner Richtung umgekehrte Gasstrom im Bereich der Umlenkfläche eine Saugwirkung erzeugt und den im Zwischenraum zwischen der Blende und dem Abscheideelement ausgebildeten Sprühnebel auch entgegen der Strömungsrichtung des Gasstromes im Strömungskanal in den nicht abgeschirmten Bereich des Strömungskanals einsaugt. Damit wird die Auffächerung und gleichmäßige Verteilung des Sprühnebels gefördert.

Besonders vorteilhaft ist es, wenn der abgeschirmte Randbereich an der Oberseite des Strömungskanals angeordnet ist, wenn also der Flüssigkeitsauslass nach unten gerichtet ist und sich der Flüssigkeitsnebel von oben nach unten ausbildet.

Bei einer bevorzugten Ausführungsform ist vorgesehen, dass in der Blende mindestens eine Durchbrechung angeordnet ist, durch die ein Teil des Gasstromes in den Teil des Zwischenraumes zwischen der Blende und dem Abscheideelement eintreten kann, der der Auslassöffnung des mindestens einen Flüssigkeitsauslasses gegenüberliegt. Dieser gegebenenfalls relativ geringe Teil des gesamten Gasstromes umströmt dadurch den Zwischenraum auf der der Auslassöffnung des Flüssigkeitsauslasses gegenüberliegenden Seite, und von dort strömt dann das Gas im wesentlichen gegen das Abscheideelement und auch an dem Abscheideelement entlang, wobei dieser Teil des Gasstromes dazu beiträgt, dass sich der Flüssigkeitsnebel von der Auslassöffnung des Flüssigkeitsauslasses ausgehend gleichmäßig im Querschnitt des Strömungskanals verteilt. Insbesondere können in der Blende nebeneinander mehrere derartige Durchbrüche angeordnet sein.

Es ist weiterhin vorteilhaft, wenn in dem von der Blende abgeschirmten Bereich des Abscheideelementes in Strömungsrichtung vor dem Abscheideelement und hinter dem mindestens einen Flüssigkeitsauslass eine gegenüber dem Abscheideelement zumindest bereichsweise geneigte Umlenkfläche angeordnet ist, die einen quer zum Abscheideelement gerichteten Gasstrom in eine Richtung umlenkt, die im wesentlichen längs des Abscheideelementes verläuft. Der Teil des Gasstromes, der durch Durchbrüche in der Blende hindurch tritt, wird durch diese Umlenkfläche in eine Richtung umgelenkt, die im wesentlichen längs des Abscheideelementes verläuft, das heißt dieser Gasstrom unterstützt ebenfalls die Ausbildung des Sprühnebels in dem nicht abgeschirmten Teil des Strömungskanals. Beispielsweise kann die Umlenkfläche bei einer besonderen Ausgestaltung zwei aneinander anschließende und gegeneinander geneigte Abschnitte aufweisen, wobei der stromaufwärts gelegene Abschnitt im Wesentlichen parallel zur Strömungsrichtung des Gasstromes in dem Strömungskanal verläuft.

Es ist dabei günstig, wenn die Umlenkfläche Durchbrechungen aufweist, so dass ein Teil des durch die Durchbrechungen in der Blende hindurch tretenden Gasstromes durch diese Durchbrechungen dem Abscheideelement zugeführt wird, während ein anderer Teil in eine Richtung längs des Abscheideelementes umgelenkt wird. Die Umlenkfläche kann insbesondere als Lochblech ausgebildet sein.

Günstig ist es, wenn die Umlenkfläche nur vor dem von der Blende abgeschirmten Teil des Abscheideelementes angeordnet ist, so dass der von der Blende nicht abgeschirmte Teil des Abscheideelementes auch von der Umlenkfläche nicht überdeckt wird, dieser Teil des Abscheideelementes bleibt frei.

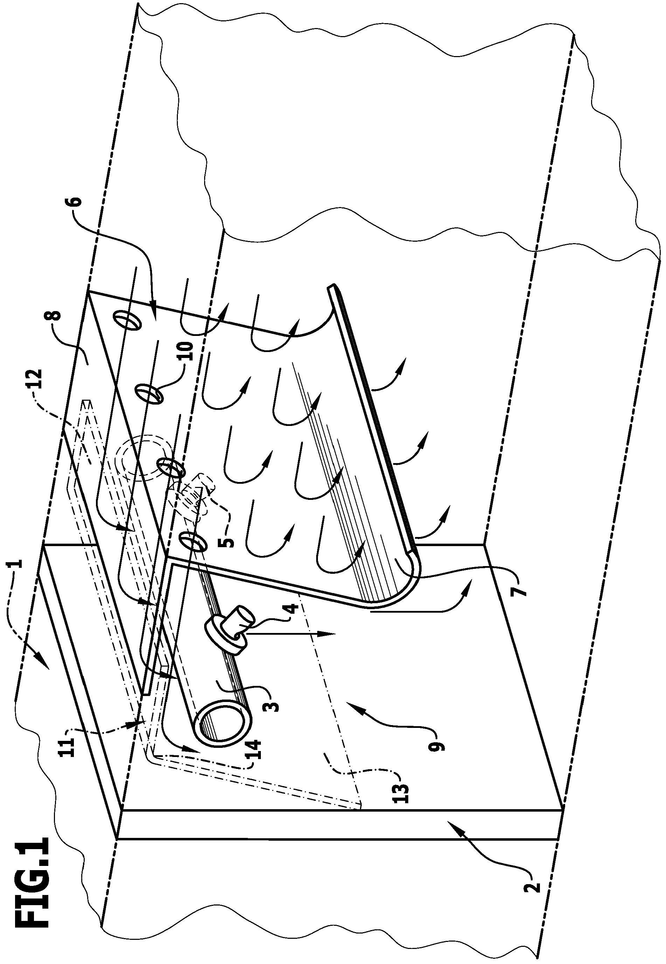

Die nachfolgende Beschreibung einer bevorzugten Ausführungsform der Erfindung dient im Zusammenhang mit der Zeichnung der näheren Erläuterung. Die Zeichnung zeigt in Figur 1 eine perspektivische Anordnung eines Abscheideelementes, einer Flüssigkeitszufuhr sowie einer Blende zur Abschirmung des Flüssigkeitszufuhrbereiches und einer Umlenkfläche zwischen der Blende und dem Abscheidelement.

Die in der Zeichnung dargestellte Vorrichtung zur Abscheidung von festen oder flüssigen Substanzen aus einem Gasstrom umfasst einen Strömungskanal 1 mit rechteckigem Querschnitt, in dem quer zur Strömungsrichtung im Strömungskanal 1 ein flächiges Abscheideelement 2 angeordnet ist, das den gesamten Querschnitt des Strömungskanals 1 verschließt, beispielsweise ein Filter oder ein aus einer Vielzahl von Umlenkelementen bestehendes flächiges Umlenkelement, das in der Zeichnung jedoch nicht näher detailliert ist.

An der Oberseite des Abscheideelementes 2 ist in geringem Abstand stromaufwärts des Abscheideelementes 2 ein quer zum Strömungskanal 1 verlaufendes, horizontales Flüssigkeitsrohr 3 angeordnet, an dem im Abstand zueinander mehrere Sprühdüsen 4, 5 vorgesehen sind, in dem dargestellten Ausführungsbeispiel sind zwei im Strömungskanal 1 nebeneinander angeordnete Sprühdüsen 4, 5 dargestellt, es könnten auch mehr derartige Sprühdüsen nebeneinander angeordnet werden, dies hängt auch von der Breite des Strömungskanals ab. Die Sprühdüsen 4, 5 sind dabei so orientiert, dass aus ihnen austretende Flüssigkeit parallel zur Fläche des Abscheideelementes 2 von oben nach unten austritt, außerdem sind die Sprühdüsen 4, 5 so ausgebildet, dass die Flüssigkeit in Form eines sich auffächernden Strahles oder eines Sprühnebels austritt.

Die austretende Flüssigkeit kann Wasser sein.

Stromaufwärts des mit den Sprühdüsen 4, 5 bestückten Flüssigkeitsrohres 3 ist im Strömungskanal 1 eine im wesentlichen quer zur Strömungsrichtung im Strömungskanal 1 angeordnete Blende 6 positioniert, die sich über die gesamte Breite des Strömungskanals 1 erstreckt, jedoch nur über einen Teil der Höhe, beispielsweise vom oberen Rand des Strömungskanals 1 ausgehend über 20% bis 40% der Höhe, insbesondere über etwa 1/3. Diese Blende endet an ihrem unteren Ende in einer kreisbogenförmig entgegen der Strömungsrichtung umgebogenen Umlenkfläche 7, die sich über einen Winkelbereich von etwa 120 bis 150° erstreckt. An der gegenüberliegenden, oberen Kante geht die Blende 6 über in eine ebene Abdeckung 8, die sich parallel zur Oberseite des Strömungskanals 1 und damit senkrecht zur Blende 6 erstreckt und die einteilig mit der Blende 6 ausgebildet ist. Die Abdeckung 8 überdeckt den Zwischenraum 9 zwischen der Blende 6 und dem Abscheideelement 2 zum Teil, sie erstreckt sich dabei bis über das Flüssigkeitsrohr 3 hinweg.

In der Nähe des oberen Randes der Blende 6 sind in dieser mehrere im dargestellten Ausführungsbeispiel kreisförmige Durchbrechungen 10 vorgesehen, diese befinden sich dabei oberhalb der Sprühdüsen 4, 5 und vorzugsweise auch oberhalb des Flüssigkeitsrohres 3.

In dem von der Blende 6 überdeckten Bereich des Strömungskanals 1 ist zwischen dem Flüssigkeitsrohr 3 einerseits und dem Abscheideelement 2 andererseits eine Umlenkfläche 11 angeordnet, die sich über die gesamte Breite des Strömungskanals 1 erstreckt und die in dem dargestellten Ausführungsbeispiel aus zwei ebenen Abschnitten 12, 13 besteht. Der obere Abschnitt 12 ist parallel zur Abdeckung 8 und unmittelbar unterhalb dieser so angeordnet, dass der stromaufwärts gelegene Rand des Abschnittes 12 unterhalb der Abdeckung 8 beginnt, der zweite Abschnitt 13 schließt sich an den ersten Abschnitt 12 mit einer Abwinklung 14 an, die am stromabwärts gelegenen Ende des ersten Abschnitts 12 angeordnet ist. Von dieser Abwinklung 14 aus verläuft der ebene zweite Abschnitt 13 schräg nach unten, wobei sein unterer Rand unmittelbar vor dem Abscheideelement 2 endet, und zwar etwa in derselben Höhe, in der sich an der Blende 6 die Umlenkfläche 7 befindet. Die Umlenkfläche 11 weist eine Vielzahl von Durchbrechungen auf, die in der Zeichnung nicht gesondert dargestellt sind, beispielsweise kann die Umlenkfläche 11 aus einem Lochblech aufgebaut sein.

Ein gegen das Abscheideelement 2 gerichteter, durch den Strömungskanal 1 strömender Gasstrom trifft im oberen Teil des Strömungskanals zunächst auf die Blende 6, dabei wird ein wesentlicher Teil des Gasstromes entgegen der ursprünglichen Strömungsrichtung umgelenkt, wie dies durch die Pfeile in der Zeichnung angedeutet wird. Ein geringerer Teil des Gasstromes tritt jedoch durch die Durchbrechungen der Blende 6 hindurch und strömt oberhalb des Flüssigkeitsrohres 3 und der Sprühdüsen 4, 5 durch den Zwischenraum 9, bis er auf den zweiten Abschnitt 13 der Umlenkfläche 11 trifft. In diesem Bereich tritt ein Teil dieses Gasstromes durch die mit Durchbrechungen versehene Umlenkfläche 11 hindurch und gelangt in das Abscheideelement 2, ein anderer Teil hingegen wird an der Umlenkfläche 11 nach unten umgelenkt, so dass ein Teil des durch die Durchbrechungen 10 hindurch tretenden Gasstromes das Flüssigkeitsrohr 3 und die Sprühdüsen 4, 5 oberseitig und auf der Seite des Abscheideelementes umströmt, dieser Teil des Gasstromes folgt dann dem zweiten Abschnitt 13 und strömt an dem nicht abgeschirmten Teil des Abscheideelementes 2 entlang. Dieser Gasstrom wird zum Teil durch die Sogwirkung des an der Umlenkfläche 7 umgelenkten Gasstromes entgegen der ursprünglichen Strömungsrichtung aus dem Zwischenraum 9 abgesaugt, zum anderen Teil vermischt er sich mit dem Teil des Gasstromes, der an der Blende 6 vorbeiströmt und direkt auf das Abscheideelement 2 auftrifft.

Wesentlich ist bei dieser Anordnung, dass die aus den Sprühdüsen 4, 5 austretende Flüssigkeit in dem Zwischenraum von dem Gasstrom im Strömungskanal 1 im wesentlichen ungestört bleibt, daher kann sich in diesem Bereich ein Flüssigkeitsnebel ausbilden, der nach unten aus dem Zwischenraum 9 austritt und damit den gesamten Querschnitt des Strömungskanals in dem nicht abgeschirmten Teil im wesentlichen homogen bedeckt. Die in diesem Bereich auf das Abscheideelement 2 auftreffenden Teile des Gasstromes im Strömungskanal 1 gelangen also durch einen homogenen Sprühnebel hindurch auf das Abscheideelement 2.

Dabei unterstützt der den Zwischenraum 9 oberhalb des Flüssigkeitsrohres 3 hindurch tretende Gasstrom, der teilweise durch die Umlenkfläche 11 nach unten abgelenkt wird, die Ausbildung dieses Sprühnebels, da dieser Gasstrom im wesentlichen parallel zur Ausbreitungsrichtung der aus den Sprühdüsen austretenden Flüssigkeit verläuft und somit die Flüssigkeitsteilchen nach unten in den von der Blende 6 nicht abgeschirmten Bereich mitnimmt.

Es hat sich herausgestellt, dass mit der beschriebenen Anordnung mit relativ wenigen Sprühdüsen und mit einem relativ geringen Druck und damit mit relativ geringem Flüssigkeitsverbrauch trotzdem eine hohe Effektivität der Abscheidewirkung am Abscheideelement 2 erzielt werden kann, da durch die geschützte Anordnung der Sprühdüsen 4, 5 eine relativ ungestörte Ausbildung des Sprühnebels gewährleistet ist, der auf dieser Weise in dem nicht abgeschirmten Bereich des Querschnitts des Strömungskanals 1 seine Wirkung voll entfalten kann.

## Patentansprüche

1. Vorrichtung zur Abscheidung von festen oder flüssigen Substanzen aus einem Gasstrom mit einem Strömungskanal (1) für das zu reinigende Gas, mit einem quer zur Strömungsrichtung des Gasstromes in dem Strömungskanal (1) angeordneten flächigen Abscheideelement (2) und mit mindestens einem Flüssigkeitsauslass (4, 5), der stromaufwärts des Abscheideelementes (2) angeordnet ist und im stromaufwärts des Abscheideelementes (2) gelegenen Abschnitt des Strömungskanals (1) einen Flüssigkeitsnebel erzeugt, wobei der mindestens eine Flüssigkeitsauslass (4, 5) stromaufwärts vor einem Randbereich des Abscheideelementes (2) angeordnet und so orientiert ist, dass aus ihm zur Erzeugung des Flüssigkeitsnebels von dem Randbereich ausgehend in Richtung auf den gegenüberliegenden Randbereich und im Wesentlichen parallel zu dem Abscheideelement (2) Flüssigkeit austritt, und wobei in dem Strömungskanal (1) stromaufwärts des mindestens einen Flüssigkeitsauslasses (4, 5) eine Blende (6) angeordnet ist, die den mindestens einen Flüssigkeitsauslass (4, 5) gegenüber dem Gasstrom abschirmt, und die im Wesentlichen quer zur Strömungsrichtung des Gasstromes und damit im Wesentlichen parallel zu dem Abscheideelement (2) angeordnet ist, wobei der Gasstrom in dem nicht abgeschirmten Querschnitt des Strömungskanals (1) weiter in Richtung auf das Abscheideelement (2) strömen kann,
**dadurch gekennzeichnet, dass** die Blende (6) an ihrem dem nicht abgeschirmten Teil des Abscheideelementes (2) zugewandten freien Rand eine entgegen der Strömungsrichtung des Gasstromes umgebogene Umlenkfläche (7) trägt.

2. Vorrichtung nach Anspruch 1, **dadurch gekennzeichnet, dass** eine den Zwischenraum (9) zwischen der Blende (6) und dem Abscheideelement (2) zumindest teilweise überdeckende Abdeckung (8) vorgesehen ist, die der Auslassöffnung des mindestens einen Flüssigkeits-auslasses (4, 5) gegenüberliegt.

3. Vorrichtung nach Anspruch 2, **dadurch gekennzeichnet, dass** die Abdeckung (8) im Wesentlichen quer zur Fläche der Blende (6) und des Abscheideelementes (2) verläuft.

4. Vorrichtung nach einem der Ansprüche 2 oder 3, **dadurch gekennzeichnet, dass** die Abdeckung (8) mit der Blende (6) verbunden ist.

5. Vorrichtung nach Anspruch 4, **dadurch gekennzeichnet, dass** die Abdeckung (8) mit der Blende (6) einteilig verbunden ist.

6. Vorrichtung nach einem der voranstehenden Ansprüche, **dadurch gekennzeichnet, dass** die Blende (6) ausgehend vom Rand des Abscheideelementes (2) zwischen 20% und 40% der Fläche des Abscheid-Elementes (2) überdeckt.

7. Vorrichtung nach einem der voranstehenden Ansprüche, **dadurch gekennzeichnet, dass** über die Breite des Strömungskanals (1) mehrere Flüssigkeitsauslässe (4, 5) nebeneinander angeordnet sind.

8. Vorrichtung nach einem der voranstehenden Ansprüche, **dadurch gekennzeichnet, dass** der abgeschirmte Randbereich an der Oberseite des Strömungskanals (1) angeordnet ist.

9. Vorrichtung nach einem der voranstehenden Ansprüche, **dadurch gekennzeichnet, dass** in der Blende (6) mindestens eine Durchbrechung (10) angeordnet ist, durch die ein Teil des Gasstromes in den Teil des Zwischenraumes (9) zwischen der Blende (6) und dem Abscheideelement (2) eintreten kann, der der Auslassöffnung des mindestens einen Flüssigkeitsauslasses (4, 5) gegenüberliegt.

10. Vorrichtung nach Anspruch 9, **dadurch gekennzeichnet, dass** in der Blende (6) nebeneinander mehrere derartige Durchbrüche (10) angeordnet sind.

11. Vorrichtung nach einem der Ansprüche 9 oder 10, **dadurch gekennzeichnet, dass** in dem von der Blende (6) abgeschirmten Bereich des Abscheideelementes (2) zwischen dem Abscheideelement (2) und dem mindestens einen Flüssigkeitsauslass (4, 5) eine gegenüber dem Abscheideelement (2) zumindest bereichsweise geneigte Umlenkfläche (11) angeordnet ist, die einen quer zum Abscheideelement (2) gerichteten Gasstrom in eine Richtung umlenkt, die im Wesentlichen längs des Abscheideelementes (2) verläuft.

12. Vorrichtung nach Anspruch 11, **dadurch gekennzeichnet, dass** die Umlenkfläche (11) zwei aneinander anschließende und gegeneinander geneigte Abschnitte (12, 13) aufweist, wobei der stromaufwärts gelegene Abschnitt (12) im Wesentlichen parallel zur Strömungsrichtung des Gasstromes in dem Strömungskanal (1) verläuft.

13. Vorrichtung nach einem der Ansprüche 11 oder 12, **dadurch gekennzeichnet, dass** die Umlenkfläche (11) Durchbrechungen aufweist.

14. Vorrichtung nach Anspruch 13, **dadurch gekennzeichnet, dass** die Umlenkfläche (11) als Lochblech ausgebildet ist.

15. Vorrichtung nach einem der Ansprüche 11 bis 14, **dadurch gekennzeichnet, dass** die Umlenkfläche (11) nur vor dem von der Blende (6) abgeschirmten Teil des Abscheideelementes (2) angeordnet ist.

## Claims

1. Device for separating solid or liquid substances from a gas flow, having a flow channel (1) for the gas that is to be purified, having a flat separating element (2) arranged transversely to the flow direction of the gas flow in the flow channel (1), and having at least one liquid outlet (4, 5), which is arranged upstream of the separating element (2) and generates a liquid mist in the portion of the flow channel (1) disposed upstream of the separating element (2), wherein the at least one liquid outlet (4, 5) is arranged upstream before an edge region of the separating element (2) and is oriented such that, in order to generate the liquid mist, liquid exits from said liquid outlet starting from the edge region in the direction of the opposite edge region and substantially parallel to the separating element (2), and wherein a panel (6) is arranged in the flow channel (1) upstream of the at least one liquid outlet (4, 5), which panel shields the at least one liquid outlet (4, 5) in relation to the gas flow and is arranged substantially transversely to the flow direction of the gas flow and thus substantially parallel to the separating element (2), wherein the gas flow in the unshielded cross-section of the flow channel (1) can flow further in the direction towards the separating element (2),
**characterised in that** the panel (6), at its free edge towards the unshielded part of the separating element (2), carries a deflection surface (7) which is bent over against the flow direction of the gas flow.

2. The device according to claim 1, **characterised in that** a cover (8) at least partly covering the gap (9) between the panel (6) and the separating element (2) is provided and is arranged facing the outlet opening of the at least one liquid outlet (4, 5).

3. The device according to claim 2, **characterised in that** the cover (8) runs substantially transversely to the surface of the panel (6) and the separating element (2).

4. The device according to either one of claims 2 or 3, **characterised in that** the cover (8) is connected to the panel (6).

5. The device according to claim 4, **characterised in that** the cover (8) is connected to the panel (6) in one piece.

6. The device according to any one of the preceding claims, **characterised in that** the panel (6) covers between 20% and 40% of the area of the separating element (2), starting from the edge of the separating element (2).

7. The device according to any one of the preceding claims, **characterised in that** a plurality of liquid outlets (4, 5) are arranged adjacently over the width of the flow channel (1).

8. The device according to any one of the preceding claims, **characterised in that** the shielded edge region is arranged on the upper side of the flow channel (1).

9. The device according to any one of the preceding claims, **characterised in that** at least one aperture (10) is arranged in the panel (6), through which aperture a part of the gas flow can enter that part of the gap (9) between the panel (6) and the separating element (2) which is opposite the outlet opening of the at least one liquid outlet (4, 5).

10. The device according to claim 9, **characterised in that** a plurality of such apertures (10) are arranged adjacently in the panel (6).

11. The device according to either one of claims 9 or 10, **characterised in that** a deflection surface (11), which is inclined at least in some regions relative to the separating element (2), is arranged in the region of the separating element (2) shielded by the panel (6) between the separating element (2) and the at least one liquid outlet (4, 5), which deflection surface deflects a gas flow directed transversely to the separating element (2) in a direction running substantially along the separating element (2).

12. The device according to claim 11, **characterised in that** the deflection surface (11) comprises two portions (12, 13) which adjoin one another and are inclined relative to one another, wherein the portion (12) disposed upstream runs substantially parallel to the flow direction of the gas flow in the flow channel (1).

13. The device according to either one of claims 11 or 12, **characterised in that** the deflection surface (11) has apertures.

14. The device according to claim 13, **characterised in that** the deflection surface (11) is formed as a perforated sheet.

15. The device according to any one of claims 11 to 14, **characterised in that** the deflection surface (11) is arranged only in front of the part of the separating element (2) shielded by the panel (6).

## Revendications

1. Dispositif servant à séparer des substances solides ou fluides d'un flux de gaz comprenant un canal d'écoulement (1) pour le gaz à purifier, comprenant un élément séparateur (2) plat disposé de manière transversale par rapport à la direction d'écoulement du flux de gaz dans le canal d'écoulement (1) et comprenant au moins une sortie de fluide (4, 5), qui est disposée en amont de l'élément séparateur (2) et qui produit, dans le tronçon, placé en amont de l'élément séparateur (2), du canal d'écoulement (1), un brouillard de fluide, dans lequel l'au moins une sortie de fluide (4, 5) est disposée en amont d'une zone de bord de l'élément séparateur (2) et est orientée de telle sorte qu'un fluide sort de ladite sortie de fluide afin de produire le brouillard de fluide en partant de la zone de bord en direction de la zone de bord faisant face et sensiblement de manière parallèle par rapport à l'élément séparateur (2), et dans lequel un cache (6) est disposé dans le canal d'écoulement (1) en aval de l'au moins une sortie de fluide (4, 5), lequel cache protège l'au moins une sortie de fluide (4, 5) par rapport au flux de gaz et qui est ainsi disposé sensiblement de manière parallèle par rapport à l'élément séparateur (2), dans lequel le flux de gaz peut s'écouler dans la section transversale non protégée du canal d'écoulement (1) davantage en direction de l'élément séparateur (2),
**caractérisé en ce que** le cache (6) supporte, au niveau de son bord libre tourné vers la partie non protégée de l'élément séparateur (2), une surface de déviation (7) repliée dans le sens inverse de la direction d'écoulement du flux de gaz.

2. Dispositif selon la revendication 1, **caractérisé en ce qu'**est prévu un couvercle (8) recouvrant au moins en partie l'espace intermédiaire (9) entre le cache (6) et l'élément séparateur (2), lequel couvercle fait face à l'ouverture de sortie de l'au moins une sortie de fluide (4, 5).

3. Dispositif selon la revendication 2, **caractérisé en ce que** le couvercle (8) s'étend sensiblement de manière transversale par rapport à la surface du cache (6) et de l'élément séparateur (2).

4. Dispositif selon l'une quelconque des revendications 2 ou 3, **caractérisé en ce que** le couvercle (8) est relié au cache (6).

5. Dispositif selon la revendication 4, **caractérisé en ce que** le couvercle (8) est relié d'un seul tenant au cache (6).

6. Dispositif selon l'une quelconque des revendications précédentes, **caractérisé en ce que** le cache (6) recouvre, en partant du bord de l'élément séparateur (2), entre 20 % et 40 % de la surface de l'élément séparateur (2).

7. Dispositif selon l'une quelconque des revendications précédentes, **caractérisé en ce que** plusieurs sorties de fluide (4, 5) sont disposées les unes à côté des autres sur la largeur du canal d'écoulement (1).

8. Dispositif selon l'une quelconque des revendications précédentes, **caractérisé en ce que** la zone de bord protégée est disposée au niveau du côté supérieur du canal d'écoulement (1).

9. Dispositif selon l'une quelconque des revendications précédentes, **caractérisé en ce qu'**au moins une découpure (10) est disposée dans le cache (6), par laquelle une partie du flux de gaz peut entrer dans la partie de l'espace intermédiaire (9) entre le cache (6) et l'élément séparateur (2), qui fait face à l'ouverture de sortie de l'au moins une sortie de fluide (4, 5).

10. Dispositif selon la revendication 9, **caractérisé en ce que** plusieurs ajours (10) de ce type sont disposés les uns à côté des autres dans le cache (6).

11. Dispositif selon l'une quelconque des revendications 9 ou 10, **caractérisé en ce qu'**est disposée, dans la zone, protégée par le cache (6) de l'élément séparateur (2) entre l'élément séparateur (2) et l'au moins une sortie de fluide (4, 5), une surface de déviation (11) au moins par endroits inclinée par rapport à l'élément séparateur (2), laquelle dévie un flux de gaz orienté de manière transversale par rapport à l'élément séparateur (2) dans une direction, qui s'étend sensiblement le long de l'élément séparateur (2).

12. Dispositif selon la revendication 11, **caractérisé en ce que** la surface de déviation (11) présente deux tronçons (12, 13) situés dans le prolongement l'un de l'autre et inclinés l'un par rapport à l'autre, dans lequel le tronçon (12) situé en amont s'étend sensiblement de manière parallèle par rapport à la direction d'écoulement du flux de gaz dans le canal d'écoulement (1).

13. Dispositif selon l'une quelconque des revendications 11 ou 12, **caractérisé en ce que** la surface de déviation (11) présente des découpures.

14. Dispositif selon la revendication 13, **caractérisé en ce que** la surface de déviation (11) est réalisée sous la forme d'une tôle perforée.

15. Dispositif selon l'une quelconque des revendications 11 à 14, **caractérisé en ce que** la surface de déviation (11) est disposée seulement devant la partie, protégée par le cache (6), de l'élément séparateur (2).
